(19) Europäisches Patentamt
European Patent Office
Office européen des brevets

(11) **EP 4 300 741 A1**

(12) **EUROPEAN PATENT APPLICATION**

(43) Date of publication:
**03.01.2024 Bulletin 2024/01**

(21) Application number: **23179159.1**

(22) Date of filing: **14.06.2023**

(51) International Patent Classification (IPC):
**H02G 15/18** (2006.01)     *H02G 15/184* (2006.01)

(52) Cooperative Patent Classification (CPC):
**H02G 15/1826;** H02G 15/1833; H02G 15/184

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105688**

(71) Applicant: **3M Innovative Properties Company
Saint Paul, MN 55133-3427 (US)**

(72) Inventor: **Nakamura, Tsunehisa
Sagamihara (Kanagawa), 2525285 (JP)**

(74) Representative: **Bergen, Katja
3M Deutschland GmbH
OIPC
Carl-Schurz-Strasse 1
41453 Neuss (DE)**

(54) **COVERING TOOL AND COVERING METHOD**

(57)     Provided is a covering tool and a covering method capable of suppressing damage to an impervious layer while reducing the strength of a diameter-expanding holding member.

A covering tool includes a cold shrink tube, a diameter-expanding holding member that holds the cold shrink tube in a state in which a diameter of the cold shrink tube is expanded, an impervious layer provided outside the cold shrink tube, and a cushion layer provided outside the cold shrink tube and bonded to the impervious layer.

FIG. 5

**Description**

Technical Field

The present disclosure relates to a covering tool and a covering method.

Background of the Invention

Patent Document 1 (JP 2001-231150 A) describes an impervious cold shrinkable tube. The impervious cold shrinkable tube includes a disassemblable tubular core, two layers of cold shrinkable tube layers supported on the tubular core with diameters elastically expanded, an impervious layer, and an adhesive layer. The impervious layer is formed by wrapping a metal foil in a tubular shape in a circumferential direction and overlapping both side edges that are opposed of the metal foil, and is interposed between the two layers of the cold shrinkable tube layers. The adhesive layer is formed by adhering to inner and outer peripheral surfaces of the impervious layer, and brings the impervious layer into close contact with the cold shrinkable tube layers.

Patent Document 2 (JP 2004-201378 A) describes an impervious tube. The impervious tube is an impervious tube provided with an impervious layer formed by forming a metal foil on which a rubber or a plastic film is layered in a cylindrical shape such that both side edges overlap and are fused or bonded with the overlapping portions. A non-permeable cushion layer made of an olefin-based foam material is layered on the inner surface of the impervious layer. An adhesive seal layer is provided on the inner surface of the cushion layer at the end portion of the impervious tube, and is attached to an outer periphery of a cable connection portion for use.

Summary

Technical Problem

In a case of a covering tool including a cold shrink tube, an impervious layer made of a metal foil, and a diameter-expanding holding member that holds the cold shrink tube in a state in which a diameter of the cold shrink tube is expanded, an overlapping portion is formed at both end edges in a circumferential direction of the metal foil of the impervious layer. Further, the impervious layer is pressed against the diameter-expanding holding member by an outside cold shrink tube. Therefore, an uneven pressure is applied to the diameter-expanding holding member in the circumferential direction. In order to support such uneven pressure, there is a problem in that a member having high strength must be employed as the diameter-expanding holding member. Further, it is also required to reduce damage to the impervious layer.

Solution to Problem

A covering tool according to the present disclosure includes a cold shrink tube, a diameter-expanding holding member that holds the cold shrink tube in a state in which a diameter of the cold shrink tube is expanded, an impervious layer provided outside the cold shrink tube, and a cushion layer provided outside the cold shrink tube and bonded to the impervious layer.

A covering method according to the present disclosure is a method for covering a cable connection portion using a covering tool, the covering tool includes a cold shrink tube, a diameter-expanding holding member that holds the cold shrink tube in a state in which a diameter of the cold shrink tube is expanded, an impervious layer provided outside the cold shrink tube, and a cushion layer provided outside the cold shrink tube and bonded to the impervious layer, and the method includes covering such that the impervious layer and the cushion layer are disposed inside the cold shrink tube with respect to the cable connection portion.

Advantageous Effects of Invention

According to the present disclosure, it is possible to provide a covering tool and a covering method capable of suppressing damage to an impervious layer while reducing the strength of the diameter-expanding holding member.

Brief Description of the Drawings

FIG. 1 is a cross-sectional view illustrating an example of a cable connection structure.

FIG. 2(a) is a drawing illustrating an example of a covering tool for covering an inside cold shrink tube. FIG. 2(b) is a cross-sectional view illustrating an example of the covering tool for covering the inside cold shrink tube.

FIG. 3 is a cross-sectional view illustrating an exemplary covering tool of an insulating tube of a cable connection portion.

FIG. 4 is a drawing illustrating the covering tool of the insulating tube.

FIG. 5 is a cross-sectional view illustrating an example of the covering tool according to a present embodiment.

FIG. 6(a) is a cross-sectional view illustrating the covering tool during covering. FIG. 6(b) is a cross-sectional view illustrating a state in which the covering is completed.

FIG. 7(a) is a drawing schematically illustrating a behavior of an impervious layer in a case where a cushion layer is provided. FIG. 7(b) is a drawing schematically illustrating a behavior of the impervious layer in a case where the cushion layer is not provided.

FIGS. 8(a) and 8(b) are photographs each illustrating a state of a folded portion of the covering tool during the covering.

FIGS. 9(a), 9(b), and 9(c) are schematic views each illustrating a state of wrinkles generated in the impervious layer.

FIG. 10 is a cross-sectional view illustrating a covering tool according to a modified example.

Detailed Description

Hereinafter, embodiments of a covering tool and a covering method according to the present disclosure will be described in detail with reference to the drawings. In the description of the drawings, the same or corresponding elements are denoted by the same reference signs, and redundant description will be appropriately omitted. In addition, the drawings may be simplified or exaggerated in part for ease of understanding, and the dimensional ratios and the like are not limited to those illustrated in the drawings.

First, the term "cable" used herein includes a power cable such as a CVT cable, an insulated wire, and a communication cable, and encompasses a wide variety of cables. "Cable connection portion" includes a connection portion that connects a plurality of cables to each other, and the periphery of the connection portion, a connection portion that connects each of the cables and a connector, and the periphery of the connection portion, and a connection portion that connects the cable and equipment other than the connector, and the periphery of the connection portion. The term "inside" according to the present disclosure refers to a cable side in a member covering the cable, that is, the inside of the cable in the radial direction. The "outside" refers to an opposite side of the cable in the member covering the cable, that is, the outside of the cable in the radial direction.

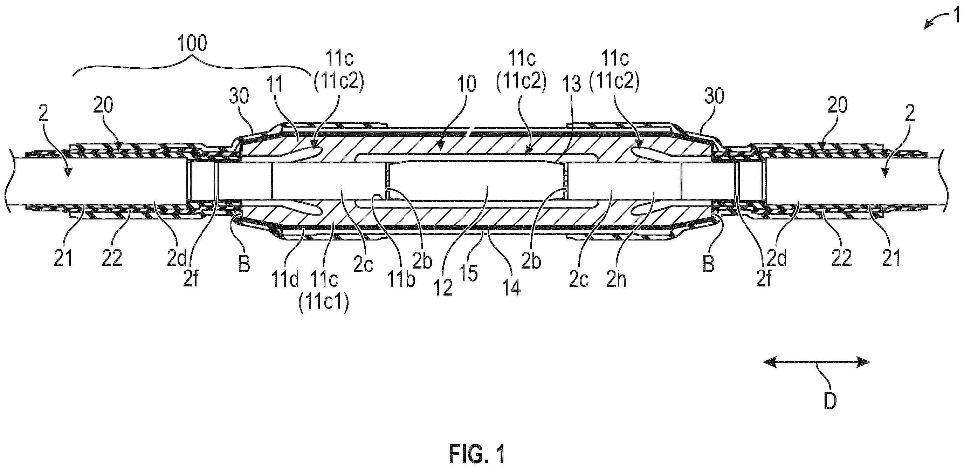

First, a cable connection structure 1 using a covering tool 110 according to a present embodiment will be described. As illustrated in FIG. 1, the cable connection structure 1 according to the present embodiment includes a pair of cables 2, a cable connection portion 10 connecting the pair of cables 2 together, a pair of inside cold shrink tubes 20 covering the cables 2, and a pair of outside cold shrink tubes 30 covering the cable connection portion 10 and the inside cold shrink tubes 20. The cable 2 is, as an example, a power cable rated at 66 kV. However, the cable 2 may be a power cable rated at 6 kV, 22 kV, 33 kV, or the like. The cable 2 includes, for example, a conductor 2b, an insulating layer 2c covering the conductor 2b, an external semi-conductive layer 2h covering the insulating layer 2c, a shielding copper tape 2f covering the external semi-conductive layer 2h, and a cable sheath 2d covering the shielding copper tape 2f. The conductor 2b has a cross-sectional area of, as an example, 80 $(mm^2)$ or more and 600 $(mm^2)$ or less, and the cable connection portion 10 has an outer diameter (diameter) of 90 (mm) or more. The cable connection portion 10 has, for example, a larger outer diameter than the cable 2. Note that although the cross-sectional area of the conductor 2b varies depending on the voltage class, for example, in the case of 66 kV, the cross-sectional area can be employed up to 3500 $(mm^2)$. For other voltage classes, more different values can be employed for the cross-sectional area of the conductor 2b.

The outer diameter of the cable connection portion 10 may have a lower limit of 100 (mm), 110 (mm), 120 (mm), or 130 (mm). The outer diameter of the cable connection portion 10 may have an upper limit of 200 (mm), 170 (mm), or 150 (mm). For example, the outer diameter of the cable connection portion 10 is 135 (mm) or more and 145 (mm) or less. However, the outer diameter of the cable connection portion 10 is not limited to the values described above, and is not particularly limited.

The cable connection portion 10 is provided at the end portions of the cables 2, and, for example, connects the end portions of the pair of cables 2 to one another. One of the cables 2, the cable connection portion 10, and the other cable 2 are disposed in alignment along a longitudinal direction D of the cable connection structure 1. A cable connection member 100 according to the present embodiment includes, for example, an insulating tube 11 constituting the cable connection portion 10, the inside cold shrink tubes 20 covering portions adjacent to the cable connection portion 10, and the outside cold shrink tubes 30 covering the cable connection portion 10 and the inside cold shrink tubes 20. However, the cable connection member 100 may include one or two of the insulating tube 11, the inside cold shrink tubes 20, and the outside cold shrink tubes 30.

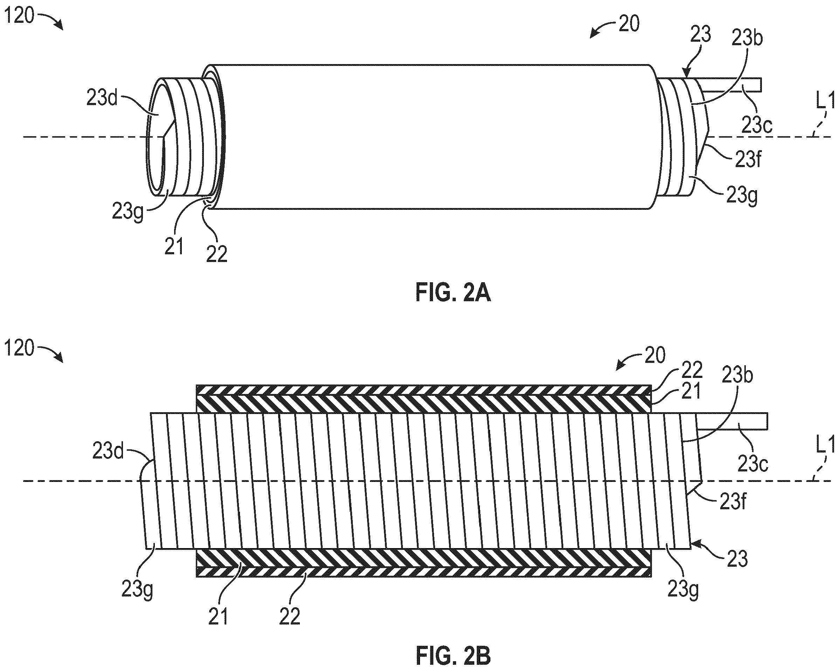

FIG. 2(a) is a perspective view illustrating an appearance of a covering tool 120 including the inside cold shrink tube 20 as an example. FIG. 2(b) is a schematic cross-sectional view of the covering tool 120 for covering the inside cold shrink tube 20. As illustrated in FIG. 2(a) and FIG. 2(b), the inside cold shrink tube 20 includes an inner layer 21 and an outer layer 22 covering the inner layer 21. The inner layer 21 and the outer layer 22 are separable from one another, for example.

The inside cold shrink tube 20 may include a diameter-expanding holding member 23 that holds the inner layer 21 and the outer layer 22 with diameters expanded. The diameter-expanding holding member 23 includes a disassembly line 23b formed in a direction in which the axis L1 of the diameter-expanding holding member 23 extends (hereinafter, also referred to as an axial direction). The diameter-expanding holding member 23 is, for example, a cylindrical, tubular hollow member. The disassembly line 23b is formed such that the line advances gradually in the axial direction while revolving or revolving and reversing around the axis L1 of the diameter-expanding holding member 23.

As a material of the diameter-expanding holding member 23, a resin material, such as polyethylene or polypropylene, is used, for example. The diameter-expanding holding member 23 can be pulled out along the disassembly line 23b as a core ribbon 23c that has a string-like body. The portion where the disassembly line 23b is formed is thinner than the remaining surrounding portion, and is easily ruptured.

The disassembly line is not limited to an aspect in which the disassembly line is spirally formed like the disassembly line 23b, and, for example, may be formed in an SZ shape, or can have any shape as long as the diameter-expanding holding member 23 can be pulled out. Pulling the core ribbon 23c sequentially ruptures the diameter-expanding holding member 23 along the disassembly line 23b, and is continuously pulled out as a new core ribbon 23c. The disassembly line 23b is formed, for example, with a constant pitch, and in this case, the width of the core ribbon 23c pulled out is constant. However, the width of the core ribbon 23c need not be constant.

The disassembly line 23b may be formed only on an inner peripheral surface of the diameter-expanding holding member 23, or may be formed only on an outer peripheral surface of the diameter-expanding holding member 23, or may be formed on both the inner peripheral surface and the outer peripheral surface of the diameter-expanding holding member 23. The diameter-expanding holding member 23 with the disassembly line 23b may be manufactured, for example, by spirally turning the disassembly line 23b, while fixing adjacent portions of the disassembly line 23b each other by bonding, welding, engagement, or a combination thereof, or may be manufactured by directly forming the disassembly line 23b in a cylindrical member.

As described above, the tubular, hollow diameter-expanding holding member that can be pulled out may be in an aspect in which the core ribbon 23c is pulled to sequentially shrink the inside cold shrink tube as is the case with the diameter-expanding holding member 23, or in an aspect in which the diameter-expanding holding member slides relative to the inside cold shrink tube and is pulled out from the inside cold shrink tube to be separated. The diameter-expanding holding member 23 includes a first end portion 23d corresponding to a start point side to be pulled out as the core ribbon 23c, and a second end portion 23f corresponding to an end point side to be pulled out as the core ribbon 23c. In the vicinity of the first end portion 23d, an exposed portion 23g is formed in which the inside cold shrink tube 20 is not installed, with the outer peripheral surface of the diameter-expanding holding member 23 exposed, and the exposed portion 23g is also formed in the vicinity of the second end portion 23f.

The core ribbon 23c disassembled from the first end portion 23d is passed through the inside of the diameter-expanding holding member 23 and pulled out from the second end portion 23f side. The core ribbon 23c is pulled out on the second end portion 23f side, and thus the diameter-expanding holding member 23 is sequentially disassembled from the first end portion 23d toward the second end portion 23f. In the present embodiment, the core ribbon 23c is formed all over the length in the axial direction, and thus the diameter-expanding holding member 23 can be completely disassembled from the first end portion 23d to the second end portion 23f. However, the disassembly line 23b only needs to be formed in at least a portion of the diameter-expanding holding member 23 in which the inside cold shrink tube 20 is held with an expanded diameter, and, for example, a portion where the disassembly line 23b is not formed may be present in a predetermined region on the second end portion 23f side.

For example, the inside cold shrink tube 20 is a member held with an expanded diameter on the outer peripheral side of the diameter-expanding holding member 23. The inside cold shrink tube 20 covers a portion of the cable 2 located adjacently to the cable connection portion 10. For example, the inner peripheral surface of the inner layer 21, the outer peripheral surface of the inner layer 21, the inner peripheral surface of the outer layer 22, and the outer peripheral surface of the outer layer 22 have smooth surfaces. The "smooth surface" refers to a smooth surface that does not have a pointed portion or an unevenness portion.

Each of the inner layer 21 and the outer layer 22 is formed of, for example, a rubber that shrinks at normal temperature and has excellent stretching properties. Each of the inner layer 21 and the outer layer 22 is made of, for example, a material having waterproof properties. In this regard, "has waterproof properties" refers to a state in which an external liquid can be prevented from entering inside with the inside cold shrink tube 20 being shrunk. "Has waterproof properties" refers to, for example, IPX7 specified in JIS C 0920 "degree of protection (IP code) provided by enclosure of electrical machinery and equipment" (when the article is immersed in water at a water depth of 1 m for 30 minutes, no water enters inside). The material of the inner layer 21 and the outer layer 22 is, for example, Ethylene Propylene Diene rubber (EPDM). The material of the inner layer 21 and the material of the outer layer 22 may be the same as or different from one another.

The thickness of the inner layer 21 is, for example, 4.5 (mm) or more and 8.5 (mm) or less. The thickness of the inner layer 21 may have a lower limit of 5 (mm), 5.5 (mm), 6 (mm), or 6.5 (mm). The thickness of the inner layer 21 may have an upper limit of 8 (mm), 7.5 (mm), or 7 (mm). Note that the value of the thickness of the inner layer 21 and the value of the thickness of the outer layer 22 are not limited to the respective examples described above, and are not particularly limited.

The inner layer 21 covers a portion of the cable 2 adjacent to the cable connection portion 10. For example, the inner layer 21 tightens the adjacent portion. As a result, a high tightening force can be exerted in the portion of the cable 2 adjacent to the cable connection portion 10. The outer layer 22 approaches the outer diameter of the inside cold shrink tube 20 to the outer diameter of the cable connection portion 10. "Approaches the outer diameter" means that the outer diameter of the inside cold shrink tube is set such that the outer diameter of the inside cold shrink tube becomes the same extent of the outer diameter of the cable connection portion, that is, the size of the outer diameter of the inside cold shrink tube is set so as to be the same extent of the outer diameter of the cable connection portion.

In the example of FIG. 1, the outer layer 22 thickens the inside cold shrink tube 20 such that the outer diameter of the inside cold shrink tube 20 approaches the outer diameter of the cable connection portion 10. That is, the portion of the outer layer 22 of the inside cold shrink tube 20 of the plurality of layers is thicker than the inside cold shrink tube of the single layer. Note that the single-layer inside cold shrink tube is equivalent to the inside cold shrink tube including only the inner layer 21 without the outer layer 22, for example. For the purpose of merely causing the outer diameter of the inside cold shrink tube 20 to approach the outer diameter of the cable connection portion 10, which has a large diameter, it is only necessary to use an inside cold shrink tube including only the further thick inner layer 21. However, the outer diameter of the cable connection portion 10 is not always limited to a large diameter and may be changed as appropriate.

Therefore, as in the present embodiment, in the case of the inside cold shrink tube 20 having the two-layer structure of the inner layer 21 and the outer layer 22, the outer layer 22 is attachable/removable in accordance with the outer diameter of the cable connection portion 10. This makes it possible to more reliably cause the outer diameter of the inside cold shrink tube 20 to approach the outer diameter of the cable connection portion 10 by attachment/removal of the outer layer 22. As the method of "approaching the outer diameter to the outer diameter of the cable connection portion," as illustrated in FIG. 1, the outer diameter may be made to approach the outer diameter of the cable connection portion by providing the outer layer 22 or by removing the outer layer 22. In the example of FIG. 1, the outer diameter of the inside cold shrink tube 20 can be made to approach the size of the outer diameter of the cable connection portion 10 with the outer layer 22, thus contributing to suppression of shrink back.

As illustrated in FIG. 1, for example, the cable connection portion 10 includes the insulating tube 11, a connector 12, and a semi-conductive tape 13. The insulating tube 11 is configured as a tubular body including a hollow portion 11b that penetrates the cable 2 in the longitudinal direction D. The insulating tube 11 includes, for example, an insulating tube body 11c including the hollow portion 11b, a shield mesh 11d, an impervious layer 14, and a cold shrink tube 15. The insulating tube body 11c is, for example, an integrally molded article of rubber.

The insulating tube body 11c as an example may include insulating rubber, for example, ethylene propylene rubber or silicone rubber. For example, the insulating tube body 11c includes insulating rubber 11c1 and conductive rubber 11c2. The conductive rubber 11c2 is provided, for example, at three locations including respective both end portions of the insulating tube body 11c in the longitudinal direction D and the center of the insulating tube body 11c in the longitudinal direction D. The shield mesh 11d covers at least a portion of the insulating tube body 11c. The impervious layer 14 covers the shield mesh 11d. For example, at least a portion of the shield mesh 11d is covered with the outside cold shrink tube 30.

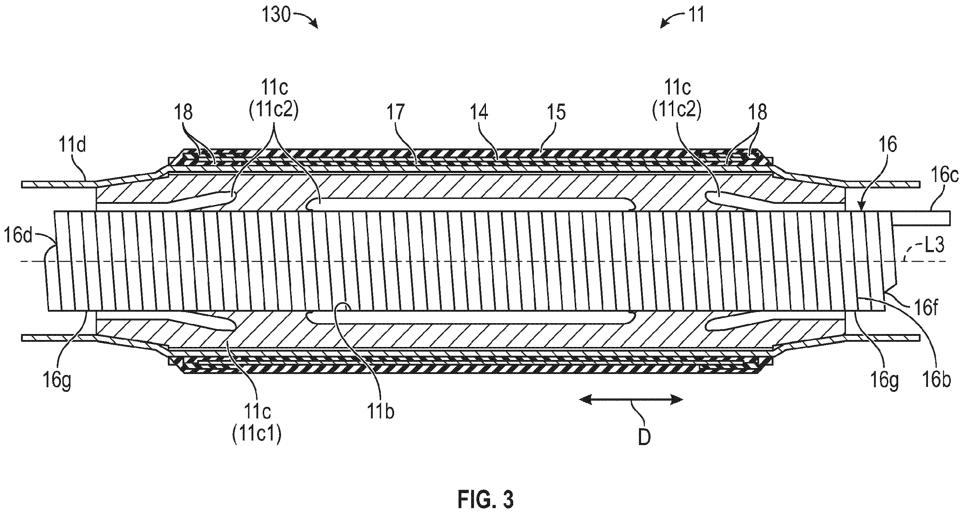

FIG. 3 is a cross-sectional view illustrating a covering tool 130 including the insulating tube 11 as an example. For example, before installation (before use), the insulating tube 11 is held around the outer circumference of a diameter-expanding holding member 16 in a state in which the insulating tube 11 has an expanded diameter. Similar to the diameter-expanding holding member 23 described above, the diameter-expanding holding member 16 includes a disassembly line 16b formed in the direction in which the axis L3 extends, and can be pulled out along the disassembly line 16b as a core ribbon 16c that has a string-like body.

The diameter-expanding holding member 16 includes a first end portion 16d corresponding to a start point side to be pulled out as the core ribbon 16c, and a second end portion 16f corresponding to an end point side to be pulled out as the core ribbon 16c. In the vicinity of the first end portion 16d, an exposed portion 16g where the insulating tube 11 is not installed but the outer surface of the diameter-expanding holding member 16 is exposed is formed, and the exposed portion 16g is also formed in the vicinity of the second end portion 16f. Thus, the shape and material of the diameter-expanding holding member 16 can be same as the shape and material of the diameter-expanding holding member 23.

The impervious layer 14 is provided inside the cold shrink tube 15. The material of the cold shrink tube 15 is, for example, EPDM. The impervious layer 14 is formed of, for example, a layered body of a metal and a resin. The impervious layer 14 has a function to prevent water infiltration from the outside to the inside (the insulating tube 11 side) of the cold shrink tube 15. When water infiltrates, for example, a phenomenon referred to as a water tree or other such harmful effect may occur in the insulating layer 2c. The impervious layer 14 suppresses the adverse effect. The material, function, and the like of the impervious layer 14 are the same as those of an impervious layer 34 described below.

For example, the insulating tube 11 includes a cushion layer 17 provided inside (as an example, between the shield mesh 11d and the impervious layer 14) of the impervious layer 14, and putty materials 18 provided on respective both ends of the cushion layer 17 in the longitudinal direction D. The cushion layer 17 as an example is provided to reduce bending of the impervious layer 14 (for example, to avoid the bending angle to be an excessively steep angle or to avoid the curvature of the bending to be excessively large) that possibly occurs when the cold shrink tube 15 is shrunk. The putty material 18 is made of butyl, as an example. The material, function, and the like of the cushion layer 17 are the same as those of a cushion layer 36 described below.

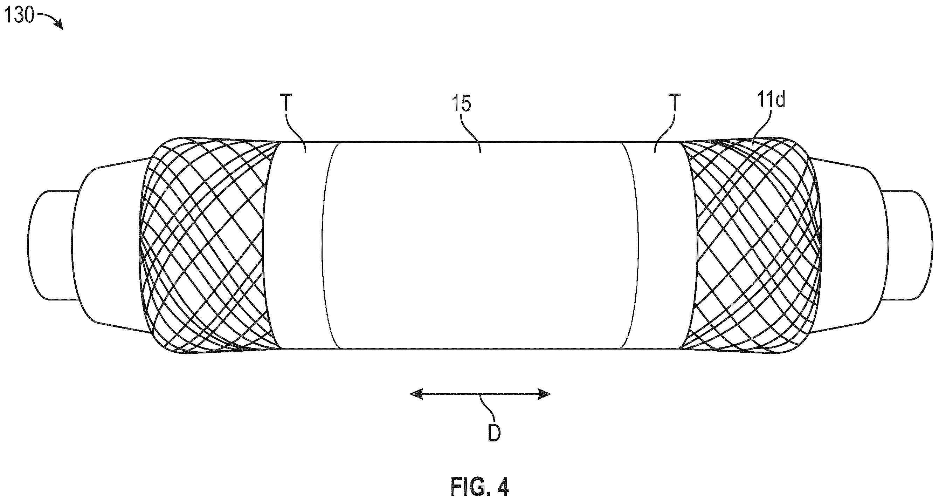

FIG. 4 is a perspective view illustrating the insulating tube 11 of FIG. 3. As illustrated in FIG. 4, the insulating tube 11 includes the shield meshes 11d, which extend from the cold shrink tube 15 attached to the outside of the impervious layer 14 to both sides in the longitudinal direction D, formed by being folded back to the center side of the longitudinal direction D. Each of the shield meshes 11d folded back to the center side of the longitudinal direction D is fixed by winding with a tape T. Various tapes can be used as the tape T as long as the tape can fix the shield mesh 11d and can be peeled.

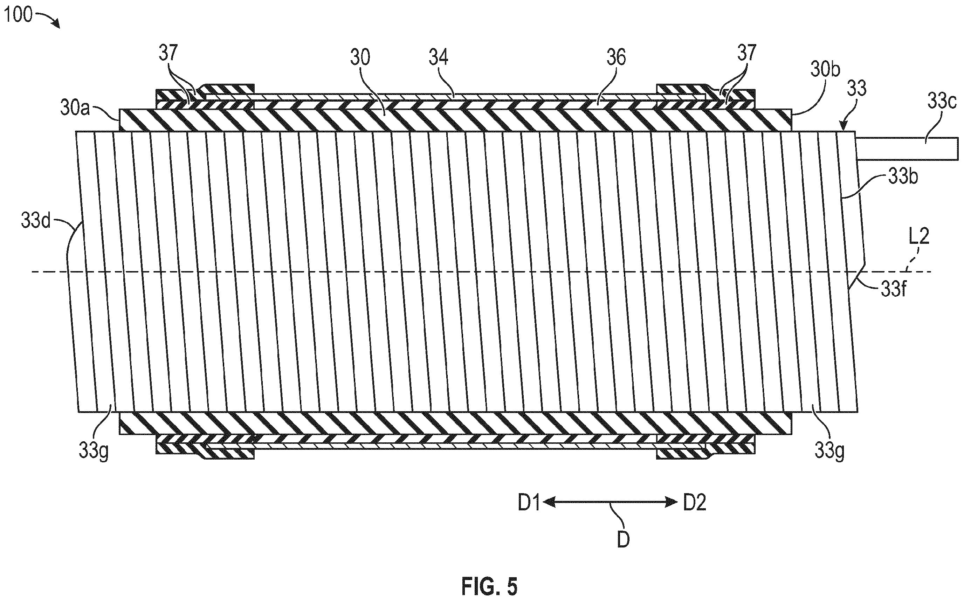

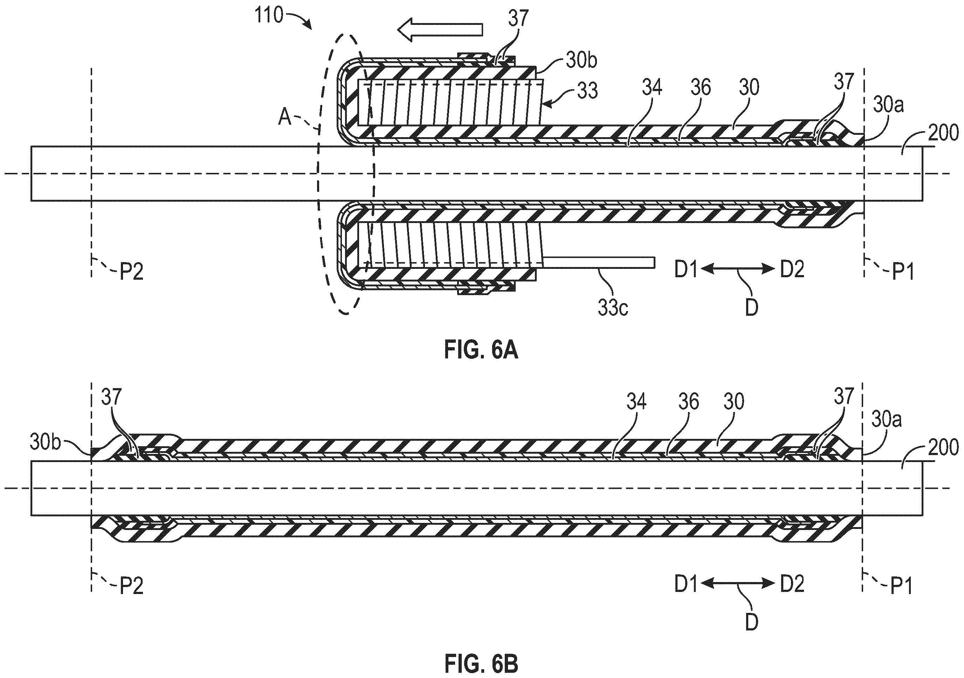

FIG. 5 is a cross-sectional view illustrating the covering tool 110 including the cold shrink tube 30 as an example. FIG. 6 is a schematic cross-sectional view illustrating a covering method using the covering tool 110. FIG. 6(a) illustrates a state during covering of a covering target 200 by the covering tool 110. FIG. 6(b) illustrates a state in which the covering by the covering tool 110 is completed. In FIG. 6, in order to facilitate understanding of a covering mode by the covering tool 110, the covering target 200 having a simple cylindrical shape is illustrated.

As illustrated in FIG. 5, the covering tool 110 includes the cold shrink tube 30, a diameter-expanding holding member 33, the impervious layer 34, a cushion layer 36, and a putty material 37 (waterproof material).

The cold shrink tube 30 covers the cable connection portion 10 and the inside cold shrink tube 20 (refer to FIG. 1). The cold shrink tube 30 has a larger diameter (outer diameter and inner diameter) than that of the inside cold shrink tube 20. For example, the cold shrink tube 30 has a larger length in the axial direction (longitudinal direction) than that of the inside cold shrink tube 20.

For example, the cold shrink tube 30 covers at least a portion of the cable connection portion 10 and at least a portion of the inside cold shrink tube 20. The cold shrink tube 30 covers a region that includes a boundary portion B between the cable connection portion 10 and the inside cold shrink tube 20. For example, like the inside cold shrink tube 20, the cold shrink tube 30 is formed of a material having waterproof properties. The material of the cold shrink tube 30 is, for example, EPDM. The thickness of the cold shrink tube 30 in a state where the covering target is covered is not limited, and the thickness may be 1 mm or more and 15 mm or less, or may be 2 mm or more and 10 mm or less. Note that the thickness here is a value focusing on one layer even in a tube having a multilayer structure like the covering tool 120.

For example, in the state of the covering tool 110, the cold shrink tube 30 is held around the outer circumference of a diameter-expanding holding member 33 in a state in which a diameter of the cold shrink tube 30 is expanded. Similar to the diameter-expanding holding member 23 described above, the diameter-expanding holding member 33 includes a disassembly line 33b formed in the direction in which the axis L2 extends, and can be pulled out along the disassembly line 33b as a core ribbon 33c that has a string-like body. Similar to the diameter-expanding holding member 23 described above, the diameter-expanding holding member 33 includes a first end portion 33d corresponding to a start point side to be pulled out as the core ribbon 33c, and a second end portion 33f corresponding to an end point side to be pulled out as the core ribbon 33c. In the vicinity of the first end portion 33d, an exposed portion 33g is formed in which the cold shrink tube 30 is not installed, with the outer surface of the diameter-expanding holding member 33 exposed, and the exposed portion 33g is also formed in the vicinity of the second end portion 33f. Thus, the shape and material of the diameter-expanding holding member 33 can, for example, be same as the shape and material of the diameter-expanding holding member 23.

In the state of the covering tool 110, the impervious layer 34 is provided outside the cold shrink tube 30. The material of the cold shrink tube 30 is, for example, EPDM. The impervious layer 34 is formed of, for example, a layered body of a metal and a resin. The impervious layer 34 contains aluminum as a metal, for example. However, the metal constituting the impervious layer 34 may contain nickel, lead, or copper, and is not particularly limited. When the impervious layer 34 includes a resin layer, corrosion of the metal constituting the impervious layer 34 is more reliably suppressed.

After the covering, the impervious layer 34 is provided on the inside of the cold shrink tube 30 and has a function of preventing water infiltration from the outside to the inside (the side of the covering target 200) of the cold shrink tube 30 (refer to FIG. 6(b)). The impervious layer 34 is formed of, for example, a layered body (also referred to as a metal laminated film) of a resin film and a metal foil. As an example, the impervious layer 34 may contain aluminum, and may be constituted by an aluminum laminated film. The impervious layer 34 may be formed by laminating a metal layer and a resin on the main surface of the metal layer. In the impervious layer 34, the resins may be laminated on both surfaces of the metal layer, or the resin may be laminated on one surface of the metal layer. However, laminating the resins on both surfaces of the metal layer of the impervious layer 34 allows providing satisfactory handleability of the impervious layer 34.

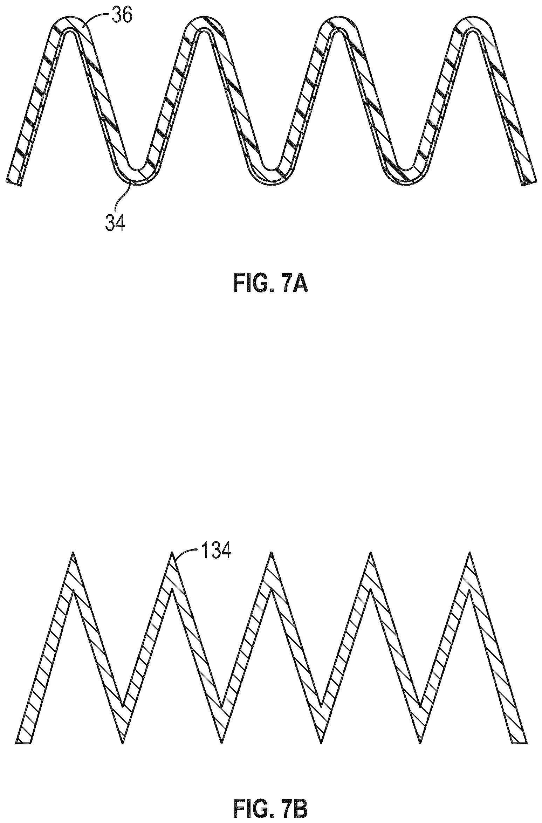

In the state of the covering tool 110, the cushion layer 36 is provided outside the cold shrink tube 30, and is bonded to the impervious layer 34. In the present embodiment, in the state of the covering tool 110, the cushion layer 36 is disposed between the cold shrink tube 30 and the impervious layer 34. After the covering, the cushion layer 36 is provided to alleviate bending of the impervious layer 34 which may occur when the cold shrink tube 30 is shrunk (refer to FIG. 7(a)). To alleviate the bending of the impervious layer 34 that possibly occurs when the cold shrink tube 30 is shrunk is, for example, to avoid the bending angle to be an excessively steep angle or to avoid the curvature of the bending to be excessively large.

The cushion layer 36 has a cushion property that deforms while under stress when a force is applied. The deformation is, for example, compression. For example, this allows reducing bending of creases due to shrinkage by partial deformation. For example, the cushion layer 36 may be made of putty material, and as an example, the cushion layer 36 is made of butyl. The cushion layer 36 may also be a foam tape made of a foamable material. The cushion layer 36 may be a strong adhesive foam tape. As an example, the cushion layer 36 is an acrylic foam tape. The foam tape of the cushion layer 36 may be constituted by a foam base material having a tackiness of a single layer, or a gluing agent layer may be provided on the main surface (for example, both surfaces) of the foam base material. The gluing agent layer of the cushion layer 36 may be, for example, a silicone-based gluing agent, in addition to an acrylic-based gluing agent.

Additionally, the cushion layer 36 is more preferably made of a material, such as a foam tape, that does not have excessively high flowability (does not easily flow when, for example, a shear force is applied due to, for example, flexure and can hold a positional relationship). In this case, since the cushion layer 36 does not flow by bending of the impervious layer 34, the cushion property can be exhibited in the positional relationship, and bending of the impervious layer 34 can be more reliably reduced.

The thickness of the cushion layer 36 is, for example, 1 mm or more and 5 mm or less. The thickness of the cushion layer 36 may be 1.1 mm or more or 1.2 mm or more. The thickness of the cushion layer 36 may be 4 mm or less or 3 mm or less. The cushion layer 36 having the thickness of a predetermined value or more allows reducing bending of the impervious layer 34. The cushion layer 36 having the thickness of the predetermined value or less allows providing satisfactory workability and cost reduction.

The 25% compressive stress of the cushion layer 36 is, for example, 30 N/cm$^2$ or less. The 25% compressive stress of the cushion layer 36 may be 20 N/cm2 or less or may be 15 N/ cm$^2$ or less. This makes it possible to exhibit the cushion property of deformation while having stress when a force is applied, thus ensuring reducing bending of the impervious layer 34. Here, the cushion layer 36 made of acrylic foam at 1.2 mm in thickness and the cushion layer 36 made of putty material at 1.5 mm in thickness were prepared. The 25% compressive stresses of the cushion layers 36 were measured from loads when the sizes of the respective cushion layers 36 were configured to be 25 mm × 25 mm and at 25% compression.

The shear strength of the base material of the cushion layer 36 is, for example, 150 N/cm$^2$ or more. The shear strength may be 200 N/cm$^2$ or more or 300 N/cm$^2$ or more. It is preferable in that the shear strength being the predetermined value or more allows suppressing the flow of the cushion layer 36 by bending of the impervious layer 34 and holding the cushion layer 36. Here, the shear strength of the cushion layer indicates a value when the shear force is measured in the following method. A 25 mm × 50 mm (1.5 mm in thickness) cushion layer 36 (putty material) was bonded to each of both surfaces of a 25 mm × 50 mm (122 μm in thickness) aluminum laminated film (impervious layer 34), sandwiched between stainless plates, a steel roller having a weight of 2 kg was moved back and forth on the aluminum laminated film once for pressure bonding, and was left to cure for 24 hours at room temperature. After that, the force of the maximum stress when the base material stretched (at the time point of elongation at several %) when the stainless plates were pulled at a tensile speed of 30 mm/minute was measured as the shear strength.

The compression set of the cushion layer 36 is, for example, 80% or less. The compression set of the cushion layer 36 may be 70% or less or may be 60% or less. It is preferable in that the compression set being the predetermined value or less allows suppressing the flow of the cushion layer 36 by bending of the impervious layer 34 and holding the cushion layer 36. Here, for the compression set of the cushion layer 36, the cushion layer 36 having the diameter of 29 mm (each of the cushion layer 36 made of acrylic foam at 1.2 mm in thickness and the cushion layer 36 made of putty material at 1.5 mm in thickness) in a 25% compression state was left at room temperature for 24 hours, the thicknesses before and after the compression were measured, and the compression set was calculated from the following Equation (1).

[Equation 1]

$$CS = \frac{h_0 - h_1}{h_0 - h_s} \times 100 \qquad \cdots (1)$$

In Equation (1), CS indicates a compression set (%), $h_0$ indicates a thickness of a test specimen before compression (mm), $h_1$ indicates the thickness of the test specimen after removal from a compression device (mm), and $h_s$ indicates a thickness of a spacer (mm).

The cushion layer 36 may be bonded to the entire surface of the impervious layer 34. In the present disclosure, "bonding" is bonding when an article itself is an adhesive (for example, a putty), bonding when an article itself includes a gluing agent (for example, a tape), or bonding when an adhesive is separately applied to an article, and "bonding" includes an aspect without using an adhesive, such as welding. In the present disclosure, first of all, "the entire surface of the impervious layer" only needs to be an entire surface of a region that functions as the impervious layer (for example, when a region includes a surplus region generated at, for example, an end portion due to a production reason, the region excluding the surplus region). Additionally, "bonding to the entire surface" also includes substantially the entire surface of the impervious layer and practically the entire surface of the impervious layer, in addition to 100%. For example, "bonding to the entire surface" includes a state in which portions where bonding is not performed are sparsely present in a small dot shape. Conversely, "bonding to the entire surface" does not include a case in which a portion in a large dot shape or a stripe shape where bonding is not performed is present and stress concentration caused by, for example, bending of the impervious layer occurs. For example, a state in which the region functioning as the impervious layer is bonded by the area 95% or more may also be "bonding to the entire surface."

FIG. 7(a) is a drawing schematically illustrating a bending state of the impervious layer 34 when the cushion layer 36 is bonded to the entire surface of the impervious layer 34. FIG. 7(b) is a drawing schematically illustrating a bending state of an impervious layer 134 in a case where the cushion layer 36 is not bonded to the impervious layer 134. As illustrated in FIG. 7(b), with the impervious layer 134 to which the cushion layer 36 is not bonded, there is a concern that the impervious layer 134 is bent during shrinkage of the cold shrink tube located outside the impervious layer 134, and a hole is formed in the impervious layer 134 in the bent portion of the impervious layer 134. As illustrated in FIG. 7(a), when the cushion layer 36 is bonded to the entire surface of the impervious layer 34, bending of the impervious layer 34 during shrinkage of the cold shrink tube 30 located outside the impervious layer 34 is reduced. In other words, by bonding the cushion layer 36 to the entire surface of the impervious layer 34, the bending angle of the impervious layer 34 becomes gradual. Accordingly, when the cushion layer 36 is bonded to the entire surface of the impervious layer 34, bending of the impervious layer 34 can be reduced, and thus formation of a hole in the impervious layer 34 can be suppressed.

In the state of the covering tool 110, the putty material 37 is a fluid putty-like waterproof material provided on at least both end sides of the outside of the cold shrink tube 30. The putty material 37 is provided on both ends of the cushion layer 36 in the longitudinal direction D. The putty material 37 is disposed so as to cover the end portion of the impervious layer 34 at both ends in the longitudinal direction D. The cushion layer 36 is disposed so as to be sandwiched between the putty materials 37 on both end sides in the longitudinal direction D. As the putty material 37, for example, a silicone rubber compound or a butyl rubber compound can be used. In the state of the covering tool 110, the putty material 37 may be covered with release paper or the like. After the covering, the putty material 37 is provided inside the cold shrink tube 30 and comes into contact with the outer surface of the covering target 200 (refer to FIG. 6(b)). Thus, the putty material 37 prevents the water infiltration from both end sides of the cold shrink tube 30.

Next, with reference to FIG. 6, a description will be given of a covering method for performing covering on the covering target 200 (the cable connection portion in FIG. 1) using the covering tool 110. For the sake of description, one side in the longitudinal direction D is referred to as a "front side D1" and the other side is referred to as a "rear side D2". The core ribbon 33c is pulled out from the rear side D2. The end portion of the cold shrink tube 30 on the front side D1 is referred to as an end portion 30a, and the end portion on the rear side is referred to as an end portion 30b (refer to also FIG. 5). In addition, in the covering region of the covering target 200, an end portion on the rear side D2 is set as a position P1, and an end portion on the front side D1 is set as a position P2.

First, the operator sets the covering tool 110 to the covering target 200. At this time, by inserting the covering target 200 into the inner peripheral side of the diameter-expanding holding member 33, the covering target 200 is set so as to be covered with the covering tool 110. In addition, the operator aligns the end portion 30a (refer to FIG. 5) of the diameter-expanding holding member 33 before disassembly with the position P1 of the covering target 200.

In this state, when the operator pulls out the core ribbon 33c, the end portion of the diameter-expanding holding member 33 on the front side D1 is disassembled. As a result, the end portion 30a of the cold shrink tube 30 shrinks to cover the position P1 of the covering target 200. Then, the operator pulls out the core ribbon 33c while moving the entire diameter-expanding holding member 33 to the front side D1. Thus, the cold shrink tube 30 shrinks sequentially from the end portion 30a side and covers the covering target 200 sequentially from the rear side D2 toward the front side D1. At this time, the cold shrink tube 30 is turned over at the front end portion of the diameter-expanding holding member 33 being disassembled (refer to "turned-over portion A" in the drawing). When a folding operation at a folded portion A is insufficient, the operator interrupts the operation of pulling out the core ribbon 33c and performs only the operation of moving the diameter-expanding holding member 33 to the front side D1. In addition, immediately before the portion of the putty material 37 is contracted, the operator peels off the release paper of the putty material 37.

As described above, since the cold shrink tube 30 is covered in a turned-over state, the order of the layer configuration in the covering tool 110 is reversed in a state in which the covering target 200 is covered. That is, the cold shrink tube 30, the cushion layer 36, and the impervious layer 34 are stacked in this order from the outer peripheral side. At the end portion in the longitudinal direction D, the putty material 37 is provided inside the cold shrink tube 30.

When the operator repeats the movement of the diameter-expanding holding member 33 and the pulling out of the core ribbon 33c as described above, all the core ribbons 33c are disassembled. At this time, as illustrated in FIG. 6(b), the end portion 30b of the cold shrink tube 30 reaches the position P2 of the covering target 200. Thus, the covering by the covering tool 110 is completed.

Next, an action and effect of the covering tool 110 and the covering method according to the present embodiment will be described.

The covering tool 110 according to the present disclosure includes the cold shrink tube 30, the diameter-expanding holding member 33 that holds the cold shrinkable tube 30 in a state in which a diameter of the cold shrink tube is expanded, the impervious layer 34 provided outside the cold shrink tube 30, and the cushion layer 36 provided outside the cold shrink tube 30 and bonded to the impervious layer 34.

Such a covering tool 110 includes the impervious layer 34. The impervious layer 34 may be formed in a cylindrical shape so that both side edges of the sheet member overlap each other, and may be formed by fusing or bonding the overlap portions. Here, in the covering tool, the impervious layer 34 is provided outside the cold shrink tube 30. Therefore, the impervious layer 34 having the overlap portion is prevented from being pressed against the diameter-expanding holding member 33 by the cold shrink tube 30 and uneven pressure is applied in the circumferential direction. Therefore, since the diameter-expanding holding member 33 does not need to withstand the uneven pressure, the strength can be reduced.

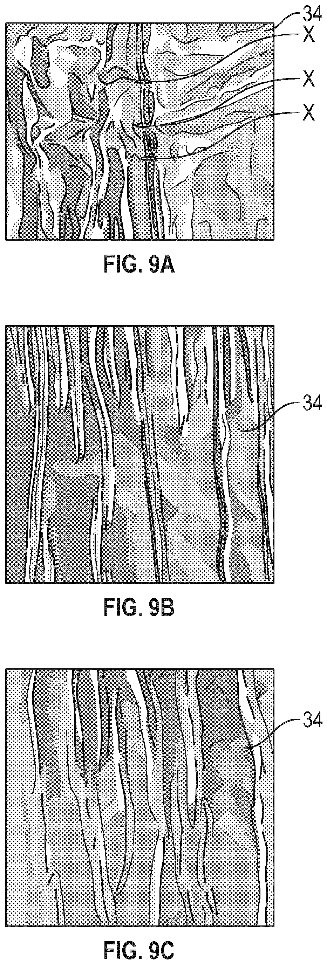

When the impervious layer 34 is provided outside the cold shrink tube 30 in the state of the covering tool 110, it is necessary to turn over the cold shrink tube 30 to cover the covering target 200. At this time, in the turned-over portion A (FIG. 6(a)), since the diameter of the cold shrink tube 30 changes, wrinkles are generated in the impervious layer 34. However, in the turned-over portion A, the cold shrink tube 30 extends in the planar direction of the impervious layer 34, so that it is temporarily peeled off from the impervious layer 34. Therefore, it is possible to suppress the occurrence of wrinkles extending in the lateral direction (circumferential direction) in the impervious layer 34 and to limit the occurrence of wrinkles to wrinkles extending only in the longitudinal direction (radial direction). For example, as illustrated in FIG. 9(a), when a wrinkle in the lateral direction and a wrinkle in the longitudinal direction occur, a hole X is formed at an intersection of the wrinkles. On the other hand, as illustrated in FIGS. 9(b) and 9(c), it is possible to suppress the occurrence of the holes X by limiting the occurrence of the wrinkles to the longitudinal direction. Furthermore, the covering tool 110 includes the cushion layer 36 provided outside the cold shrink tube 30 and bonded to the impervious layer 34. Therefore, as illustrated in FIG. 7(a), by supporting the impervious layer 34 with the cushion layer 36, it is possible to alleviate the bending of the wrinkles generated in the impervious layer 34. As described above, damage to the impervious layer 34 can be suppressed while reducing the strength of the diameter-expanding holding member 33.

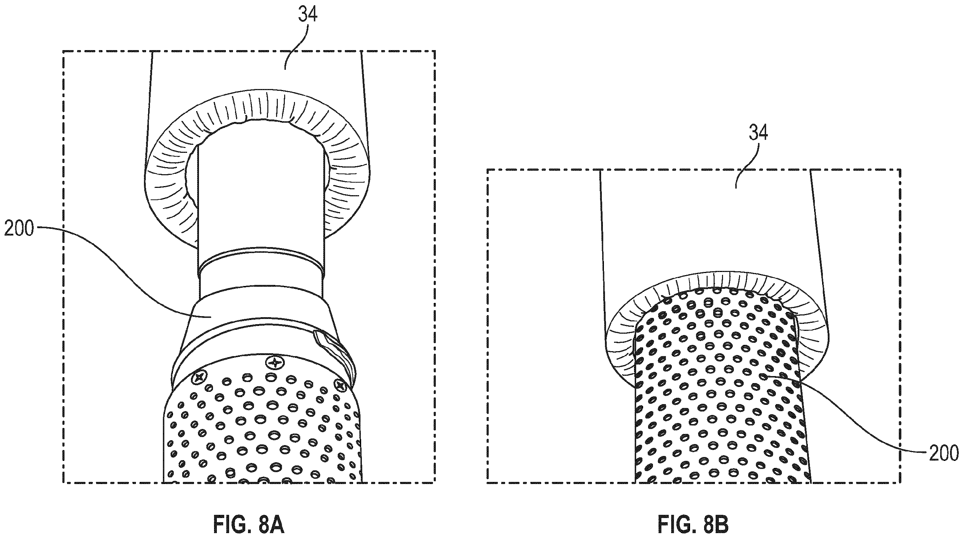

As illustrated in FIG. 8(a), an actual covering operation was performed using the covering tool 110. When a portion of the covering target 200 having a small diameter was covered, most of the wrinkles generated were vertical wrinkles. In addition, as illustrated in FIG. 8(b), in the case of covering a portion of the covering target 200 having a large diameter, most of the wrinkles generated were wrinkles in the longitudinal direction.

The covering tool 110 further includes the putty-like putty material 37 (waterproof material) provided on at least both end sides of the outside of the cold shrink tube 30. In this case, the waterproof properties of both end sides of the cold shrink tube 30 after the covering can be enhanced. In addition, since the putty material 37 is provided on the outer peripheral side, it is not necessary to consider releasability from the diameter-expanding holding member 33, and it is not necessary to consider tackiness of the putty material 37. For example, when the putty material 37 is provided on the inner peripheral side, the putty material 37 is positioned between the diameter-expanding holding member 33 and the cold shrink tube 30, and there may be a problem in that the diameter-expanding holding member 33 cannot be disassembled and pulled out or the putty material 37 comes out when the diameter-expanding holding member 33 is disassembled and pulled out. Further, as illustrated in FIG. 6(a), the diameter-expanding holding member 33 does not come into direct contact with the outer surface of the covering target 200. Therefore, even in a case where a layer of a material having tackiness or fluidity such as putty material or grease is formed on the outer surface of the covering target 200, the covering can be performed without causing such a problem that the layer is deformed or moved by disassembling or pulling out the diameter-expanding holding member 33.

The impervious layer 14 may be configured by a layered body of a metal and a resin. In this case, protection of the metal of the impervious layer 14 by the resin allows providing the satisfactory handleability of the impervious layer 14.

The cushion layer 17 may be configured by a foam tape. In this case, a foam tape having high shape maintainability in which flowability of the cushion layer 17 is low is used as the cushion layer 17. Accordingly, the change in shape of the cushion layer 17 due to the bending of the impervious layer 14 can be suppressed, thereby ensuring suppressing formation of a hole in the impervious layer 14 more reliably.

The covering method according to the present embodiment is a method for covering the covering target 200 using the covering tool 110, the covering tool 110 includes the cold shrink tube 30, the diameter-expanding holding member 33 that holds the cold shrinkable tube 30 in a state in which a diameter of the cold shrink tube is expanded, the impervious layer 34 provided outside the cold shrink tube 30, and the cushion layer 36 provided outside the cold shrink tube 30 and bonded to the impervious layer 34, and the method includes covering such that the impervious layer 34 and the cushion layer 36 are disposed inside the cold shrink tube 20 with respect to the covering target 200.

According to the covering method, the same actions and effects as those of the covering tool 110 described above can be obtained.

The present invention is not limited to the embodiments described above.

In order to configure the cable connection structure 1 illustrated in FIG. 1 described above, one covering tool 130, two covering tools 120, and two covering tools 110 are used. However, in the covering tool 130, the cold shrink tube 15, the impervious layer 14, the cushion layer 17, and the putty material 18 are included in the insulating tube 11 in advance, but these members may be omitted from the insulating tube 11. In this case, a covering tool 110 for covering the insulating tube 11 may be used. Before this, in order to configure the cable connection structure 1, one covering tool 130, two covering tools 120, and three covering tools 110 may be used.

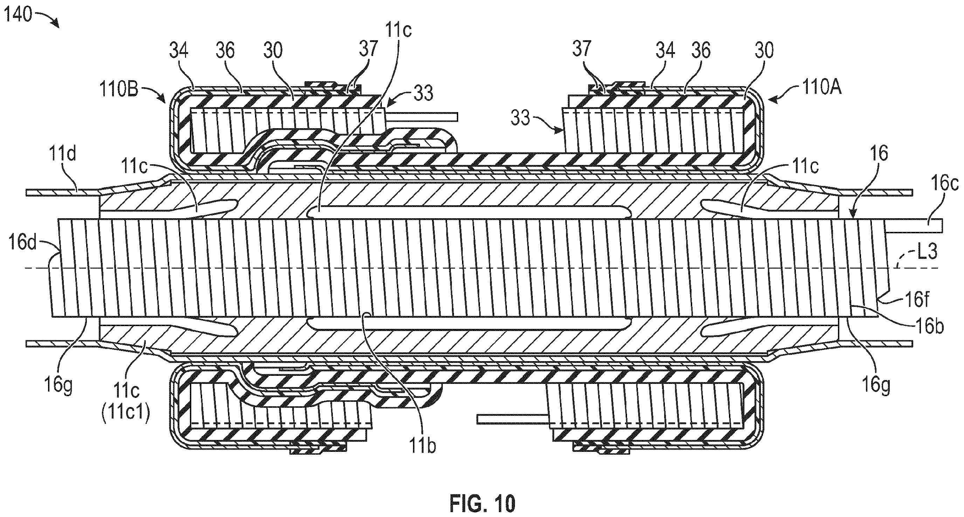

For example, a covering tool 140 as illustrated in FIG. 10 may be employed. The covering tool 140 includes two covering tools 110A and 110B outside the shield mesh 11d of the covering tool 130 illustrated in FIG. 3. The first covering tool 110A is disposed in a state of covering the shield mesh 11d halfway. The second covering tool 110B is disposed in a state where the shield mesh 11d and a part of the cold shrink tube 30 of the covering tool 110A are covered halfway.

Aspect 1

A covering tool including:

a cold shrink tube;
a diameter-expanding holding member that holds the cold shrink tube in a state in which a diameter of the cold shrink tube is expanded;
an impervious layer provided outside the cold shrink tube; and
a cushion layer provided outside the cold shrink tube and bonded to the impervious layer.

Aspect 2

The covering tool according to aspect 1, further including a putty-like waterproof material provided on at least both end sides of the outside of the cold shrink tube.

Aspect 3

The covering tool according to aspect 1 or 2, wherein
the impervious layer is configured by a layered body of a metal and a resin.

Aspect 4

The covering tool according to any one of aspects 1 to 3, wherein
the cushion layer is configured by a foam tape.

Aspect 5

A covering method for covering a covering target using a covering tool,

the covering tool including

a cold shrink tube,

a diameter-expanding holding member that holds the cold shrink tube in a state in which

a diameter of the cold shrink tube is expanded,

an impervious layer provided outside the cold shrink tube, and
a cushion layer provided outside the cold shrink tube and bonded to the impervious layer,

the covering method comprising
covering the covering target such that the impervious layer and the cushion layer are disposed inside the cold shrink tube.

**Claims**

1. A covering tool comprising:

   a cold shrink tube;
   a diameter-expanding holding member that holds the cold shrink tube in a state in which a diameter of the cold shrink tube is expanded;
   an impervious layer provided outside the cold shrink tube; and
   a cushion layer provided outside the cold shrink tube and bonded to the impervious layer.

2. The covering tool according to claim 1, further comprising
   a putty-like waterproof material provided on at least both end sides of the outside of the cold shrink tube.

3. The covering tool according to claim 1, wherein
   the impervious layer is configured by a layered body of a metal and a resin.

4. The covering tool according to claim 1, wherein
   the cushion layer is configured by a foam tape.

5. A covering method for covering a covering target using a covering tool,
   the covering tool including

   a cold shrink tube,
   a diameter-expanding holding member that holds the cold shrink tube in a state in which a diameter of the cold shrink tube is expanded,
   an impervious layer provided outside the cold shrink tube, and
   a cushion layer provided outside the cold shrink tube and bonded to the impervious layer, the covering method comprising
   covering the covering target such that the impervious layer and the cushion layer are disposed inside the cold shrink tube.

FIG. 1

FIG. 2A

FIG. 2B

**FIG. 3**

EP 4 300 741 A1

FIG. 4

**FIG. 5**

EP 4 300 741 A1

**FIG. 6A**

**FIG. 6B**

EP 4 300 741 A1

FIG. 7A

FIG. 7B

FIG. 8B

FIG. 8A

FIG. 9A

FIG. 9B

FIG. 9C

**FIG. 10**

EP 4 300 741 A1

Europäisches
Patentamt

European
Patent Office

Office européen
des brevets

# EUROPEAN SEARCH REPORT

Application Number

EP 23 17 9159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2022/259075 A1 (3M INNOVATIVE PROPERTIES COMPANY [US]) 15 December 2022 (2022-12-15) * page 10, line 29 – page 14, line 7; claims 1, 5, 7; figure 4 * * page 15, line 25 – page 16, line 2 * | 1-5 | INV. H02G15/18 ADD. H02G15/184 |
| X | JP 2001 231123 A (FURUKAWA ELECTRIC CO LTD) 24 August 2001 (2001-08-24) * paragraph [0014]; figures 1, 2, 5 * | 1,5 | |
| A | JP 2002 015790 A (FUJIKURA LTD) 18 January 2002 (2002-01-18) * the whole document * | 1-5 | |
| A | JP 2004 201378 A (FURUKAWA ELECTRIC CO LTD) 15 July 2004 (2004-07-15) * the whole document * | 1-4 | |

TECHNICAL FIELDS
SEARCHED      (IPC)

H02G

The present search report has been drawn up for all claims

| Place of search | Date of completion of the search | Examiner |
|---|---|---|
| The Hague | 16 November 2023 | Hermann, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## EP 4 300 741 A1

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | | Publication date | Patent family member(s) | | Publication date |
|---|---|---|---|---|---|
| WO 2022259075 | A1 | 15-12-2022 | JP | 2022188575 A | 21-12-2022 |
| | | | WO | 2022259075 A1 | 15-12-2022 |
| JP 2001231123 | A | 24-08-2001 | NONE | | |
| JP 2002015790 | A | 18-01-2002 | NONE | | |
| JP 2004201378 | A | 15-07-2004 | JP | 3895682 B2 | 22-03-2007 |
| | | | JP | 2004201378 A | 15-07-2004 |

EPO FORM P0459

For more details about this annex : see Official Journal of the European Patent Office, No. 12/82

**EP 4 300 741 A1**

**Patent documents cited in the description**

- JP 2001231150 A

- JP 2004201378 A